**Europäisches Patentamt**

**European Patent Office**

**Office européen des brevets**

(19)

(11) Numéro de publication: **0 251 199 B1**

(12) **FASCICULE DE BREVET EUROPEEN**

(45) Date de publication du fascicule du brevet:
03.10.90

(21) Numéro de dépôt: **87109121.1**

(22) Date de dépôt: **25.06.87**

(51) Int. Cl.⁵: **B65G 1/04,** B65G 1/10,
G07F 11/54

(54) **Dispositif de stockage et de distribution d'objets.**

(30) Priorité: **01.07.86 FR 8609531**
**03.03.87 FR 8702841**
**30.03.87 FR 8704403**

(43) Date de publication de la demande:
**07.01.88 Bulletin 88/1**

(45) Mention de la délivrance du brevet:
**03.10.90 Bulletin 90/40**

(84) Etats contractants désignés:
**AT BE CH DE ES FR GB GR IT LI LU NL SE**

(56) Documents cités:
**DE-A- 1 290 488**
**DE-A- 2 224 586**
**DE-A- 3 335 960**
**DE-B- 1 222 473**
**US-A- 3 135 567**
**US-A- 3 439 815**
**US-A- 3 845 855**

(73) Titulaire: **Guigan, Jean, 9, rue Jean Mermoz,
F-75008 Paris(FR)**
Titulaire: **Guigan, Franck, 100, rue St Dominique,
F-75007 Paris(FR)**

(72) Inventeur: **Guigan, Jean, 9, rue Jean Mermoz,
F-75008 Paris(FR)**
Inventeur: **Guigan, Franck, 100, rue St Dominique,
F-75007 Paris(FR)**

(74) Mandataire: **Weinmiller, Jürgen et al,
Lennéstrasse 9 Postfach 24, D-8133 Feldafing(DE)**

ACTORUM AG

## Description

La présente invention concerne un dispositif de stockage et de distribution d'objets ; il s'agit en particulier mais non exclusivement de boîtes empilables de dimensions variées, par exemple de paquets de cigarettes, de cassettes, de livres etc ; de préférence les objets sont de forme parallélépipédique ou ont un emballage de cette forme.

La présente invention est destinée à être utilisée par exemple dans les lieux publics pour le stockage, la distribution, et le réapprovisionnement desdits objets.

On connaît par le brevet français n° 2 138 272 un dispositif de stockage et de distribution destiné notamment à la vente de boîtes de médicaments. Un tel dispositif comporte :

- au moins un module fixe parallélépipédique contenant des tiroirs juxtaposés et divisés chacun en compartiments verticaux destinés à contenir chacun un empilement d'objets d'un type déterminé ; les deux parois latérales de chaque tiroir présentent dans chaque compartiment deux ouvertures en regard l'une de l'autre susceptibles de laisser le passage à un objet contenu dans le compartiment, ces deux ouvertures communiquant par l'intermédiaire d'une fente pratiquée dans la base dudit tiroir,

- des moyens mécaniques pour sortir un tiroir dudit module suivant un mouvement de translation horizontale, pour amener un compartiment de ce tiroir au dessus d'un moyen d'évacuation commun à tous les tiroirs d'un même module, et constitué par une bande transporteuse disposée le long du module perpendiculairement à ladite translation horizontale, et munie d'un éjecteur susceptible de s'introduire dans ladite fente.

Ce dispositif de stockage et de distribution était particulièrement adapté aux besoins d'une officine.

On connaît en outre par le document DE-B 1 290 488 un dispositif de distribution d'objets comportant une pluralité de magasins annulaires superposés ayant un axe de symétrie commun et formant une structure cylindrique, et un moteur associé à un codeur d'angle permettant d'entraîner en rotation ladite structure cylindrique, chaque magasin comportant une pluralité de logements destinés à stocker chacun une boîte unitaire et présentant une ouverture sur la périphérie de la structure cylindrique pour laisser le passage à une seule boîte.

Ce dispositif a été conçu pour trier des sachets de films dans un atelier et ne se prête pas à l'installation dans un lieu public.

On connaît enfin par le document US-A-3.439.815 un dispositif selon le préambule des revendications indépendantes 1 et 15. Dans ce dispositif, toutes les cases de stockage ont la même dimension.

La présente invention a pour but de réaliser un dispositif de stockage et de distribution d'objets extrêmement variés, mieux adapté que les dispositifs antérieurs à la vente dans les lieux publics, et dont le coût soit adapté à cette utilisation.

Ce but est atteint selon l'invention par le dispositif tel que défini dans l'une des revendications indépendantes. En ce qui concerne des exemples de mise en oeuvre préférée de ce dispositif, référence est faite aux revendications secondaires.

Grâce à l'invention, l'extraction d'une boîte du dispositif est obtenue par un mouvement relatif simple de la structure cylindrique de stockage et d'un organe de commande d'extraction.

D'autres caractéristiques et avantages de la présente invention apparaîtront au cours de la description suivante des modes de réalisation donnés à titre illustratif mais nullement limitatif.

Dans le dessin annexé :

- la figure 1 est une vue schématique en élévation partiellement coupée et déchirée d'un exemple de dispositif selon l'invention,

- la figure 2 montre un exemple de disposition d'objets de tailles différentes sur un plateau d'un magasin annulaire selon l'invention,

- la figure 3 montre une autre variante de disposition d'objets de tailles différentes sur un plateau d'un magasin annulaire selon l'invention,

- la figure 4 est une vue schématique en coupe selon la ligne IV-IV de la figure 1 montrant partiellement un magasin appartenant à un dispositif selon l'invention, associé à un organe de commande des moyens d'extraction d'objets,

- la figure 5 est une vue schématique de dessus montrant plus en détail la partie importante de l'organe de commande des moyens d'extraction d'objets de la figure 4,

- la figure 6 est une vue partielle en coupe selon la ligne VI-VI de la figure 5,

- la figure 7 est une vue transversale semi-coupée montrant la coopération de l'organe de commande d'extraction avec un maillon éjecteur d'une chaîne d'entraînement située sous un logement d'un magasin annulaire selon l'invention,

- la figure 8 est une vue analogue à celle de la figure 7 montrant la coopération de l'organe de commande d'extraction avec un maillon normal de ladite chaîne selon l'invention,

- la figure 9 est une vue de dessus de la chaîne d'entraînement d'un objet selon l'invention, située sous un logement d'un magasin annulaire,

- la figure 10 est une vue agrandie de quelques maillons de la chaîne d'entraînement de la figure 9,

- la figure 11A est une vue en élévation d'un maillon éjecteur appartenant à la chaîne d'entraînement de la figure 10,

- la figure 11B est une vue de côté du maillon éjecteur de la figure 11A,

- la figure 12A est une vue en élévation d'un maillon normal appartenant à la chaîne d'entraînement de la figure 10,

- la figure 12B est une vue de côté du maillon de la figure 12A,

- la figure 13 est une vue longitudinale semi-coupée d'un logement d'un magasin annulaire avec son compartiment inférieur destiné à contenir la chaîne d'entraînement selon la figure 9,

- la figure 14 est une vue de côté correspondant à la vue longitudinale de la figure 13,

- la figure 15 est une vue partielle en coupe transversale d'un logement avec son compartiment muni de la chaîne selon l'invention,

- la figure 16 montre une variante du dispositif selon la figure 4 comportant plusieurs organes de commande d'extraction à chaque étage,

- la figure 17 montre en coupe longitudinale un exemple de logement appartenant à une variante de dispositif selon l'invention et destiné à contenir une file de boîtes,

- la figure 18 est une vue de côté selon la flèche XVIII de la figure 17,

- la figure 19 montre en vue de dessus très schématiquement la chaîne du logement de la figure 17 associée à son organe de commande d'extraction,

- la figure 20 montre en coupe longitudinale une variante du logement de la figure 17 avec une file de blisters,

- la figure 21 est une vue de côte selon la flèche XXI de la figure 20,

- la figure 22 montre schématiquement en vue partielle de dessus semi-coupée un magasin annulaire fixe avec un organe de commande d'extraction interne mobile en rotation,

- la figure 23 montre plus en détail en vue de dessus l'organe de commande d'extraction de la figure 22,

- la figure 24 montre plus en détail la chaîne destinée à coopérer avec l'organe de commande d'extraction de la figure 23,

- la figure 25 est une vue schématique en élévation partiellement déchirée d'un autre type de dispositif selon l'invention à magasins annulaires fixes,

- la figure 26 est une vue partielle schématique en élévation d'un magasin annulaire appartenant au dispositif de la figure 25,

- la figure 27 est une vue de dessus coupée selon la ligne XXVII-XXVII de la figure 26,

- la figure 28 est une vue de dessus partiellement coupée d'un magasin annulaire de la figure 26 associé à l'ensemble unitaire de commande des moyens d'extraction,

- la figure 29 est une vue schématique semi-coupée passant par l'axe du dispositif de stockage de la figure 25 et montrant des magasins annulaires associés à l'ensemble unitaire de commande des moyens d'extraction,

- la figure 30 est une vue agrandie de la lucarne apparaissant dans la figure 29,

- la figure 31 est une vue de côté associée à la vue de la figure 30,

- la figure 32 illustre schématiquement et partiellement en vue de dessus une variante des moyens d'extraction de la figure 28 et de leur organe de commande,

- la figure 33 est une vue latérale en élévation correspondant à la flèche 801 de la figure 32,

- la figure 34 est une vue analogue à la figure 25 avec une variante pour l'ensemble unitaire de commande des moyens d'extraction.

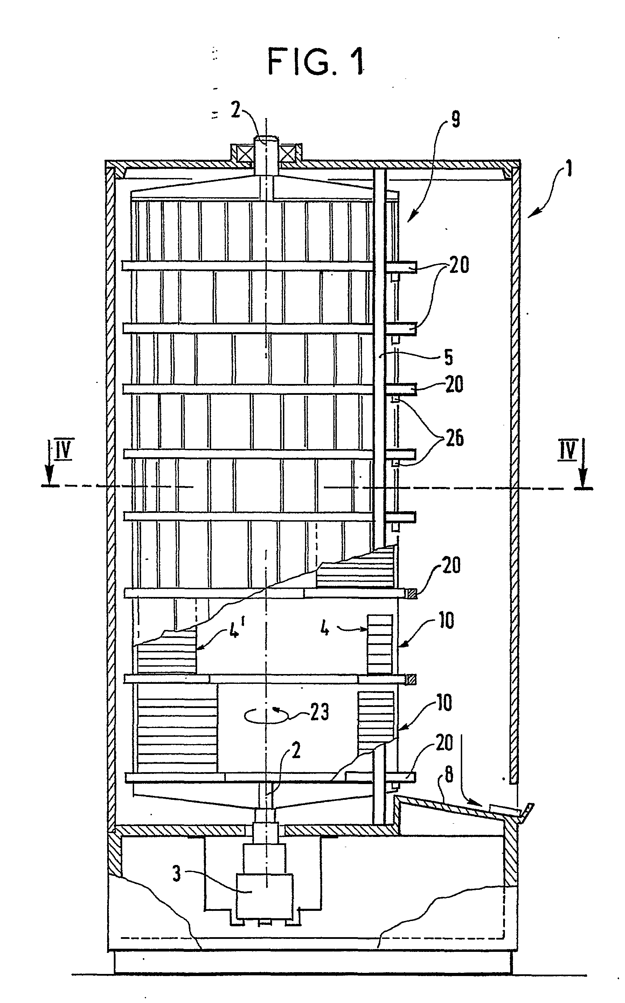

On a dans la figure 1 une vue d'ensemble semi-arrachée d'un exemple de dispositif selon l'invention.

On a représenté un bâti 1 comportant un empilement de magasins annulaires tels que le magasin 10 ayant un axe commun 2 et solidarisés entre eux.

Comme on va le voir en détail plus loin, chaque magasin est muni de logements radiaux contenant chacun un empilement de boîtes, 4, 4', d'un type déterminé.

La structure cylindrique 9 d'axe 2 qui vient d'être définie est entraînée en rotation autour de cet axe par un moteur pas à pas 3 ou un moteur associé à un codeur d'angle. Le sens de rotation est mentionné par la flèche 23.

La référence 8 correspond à la zone où l'on peut réceptionner un objet extrait du dispositif.

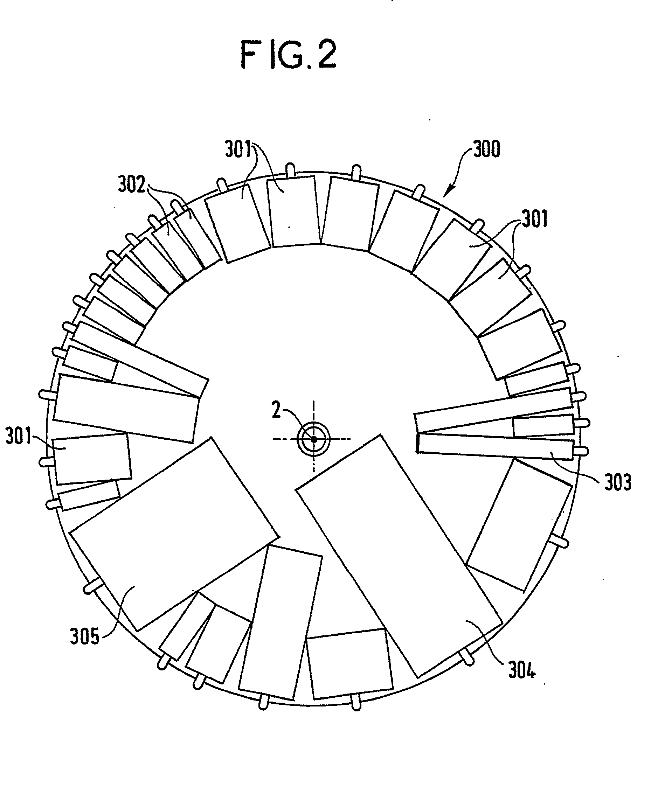

La figure 2 donne un autre exemple schématique de disposition de logements dans un magasin annulaire référencé 300 ; ils sont de tailles différentes mais tous orientés de la même manière, en position sensiblement radiale. Les logements 301 sont destinés par exemple à recevoir un empilement de cassettes, les logements 302 des cassettes ou des paquets de cigarettes posés sur la tranche, les logements 303 des paquets de deux cassettes posés sur la tranche ; les logements 304 et 305 peuvent contenir un empilement de livres, de boîtes de cosmétique diverses, etc... Tous les logements ont une ouverture d'évacuation sur la périphérie du magasin 300.

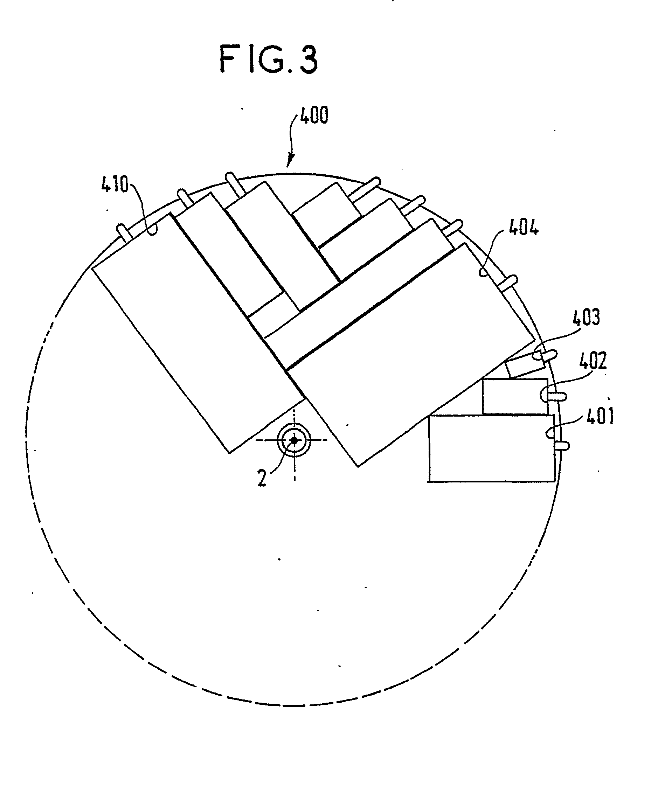

Dans la variante de la figure 3, le magasin 400 n'a pas tous ses logements orientés de manière radiale vis-à-vis de l'axe 2 ; les logements sont arrangés de manière à couvrir la plus grande surface possible du plateau de base du magasin 400 et ils présentent tous une ouverture d'évacuation 401, 402, 403, 404,...410 située sur la périphérie du magasin 400.

Tous ces magasins peuvent être réalisés à partir d'un plateau de base et de cloisons, ou de logements rapportés et fixés par tout moyen approprié.

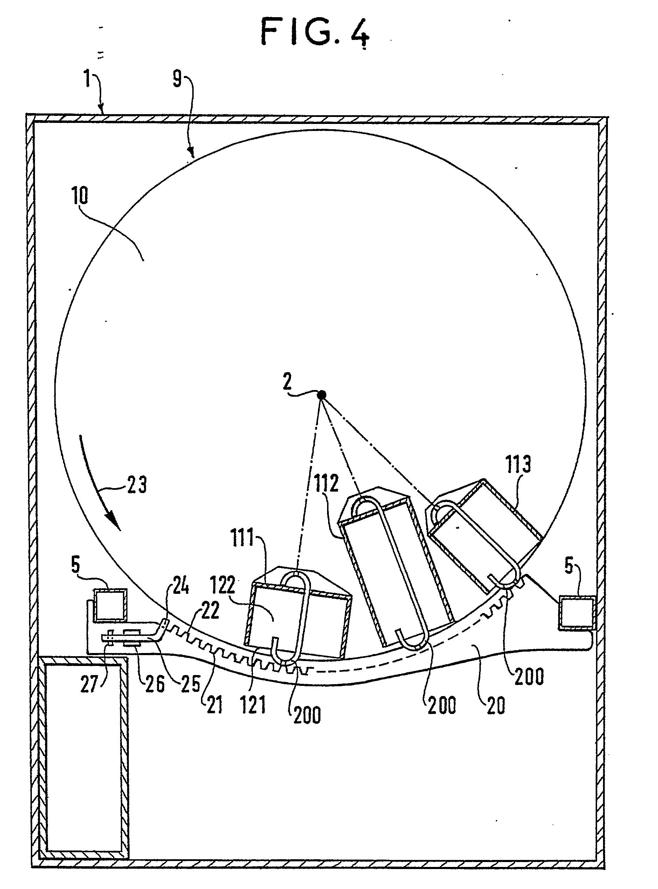

Si on se reporte à la figure 4, on voit que l'extraction d'un objet d'un logement 111, 112, 113,... d'un magasin 10 est assurée par un organe de commande 20, situé à l'extérieur de la structure cylindrique 9. Les différents organes de commande 20 sont solidarisés à chaque étage du dispositif au niveau de colonnes 5. Chaque organe comporte essentiellement un secteur métallique denté sur sa périphérie 21, dont la première dent fixe est référencée 22. Devant cette dent est prévue une dent mobile 24 portée par un bras 25 pivotant autour d'un axe 27 par la mise en oeuvre d'un électro-aimant 26.

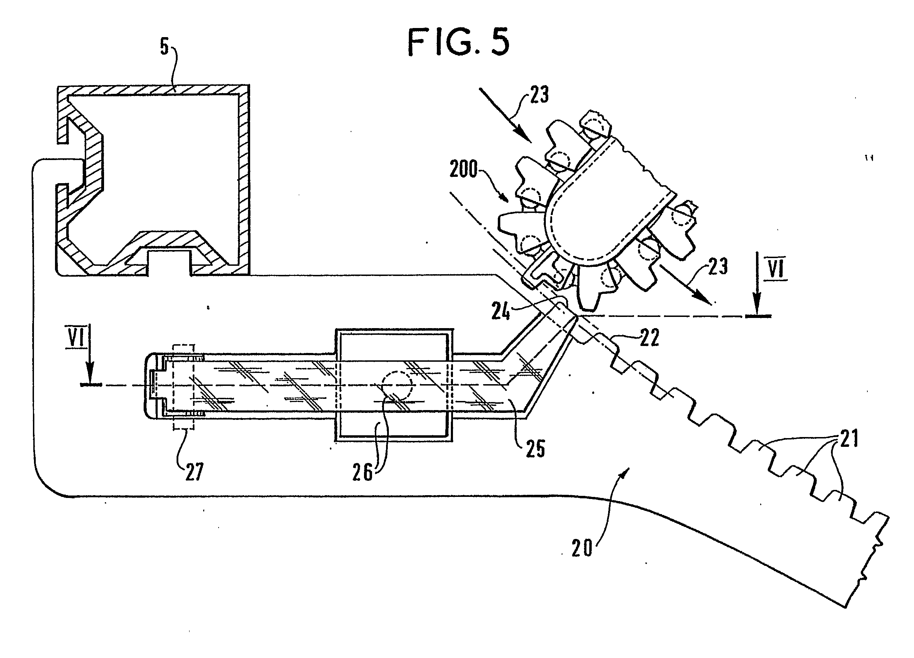

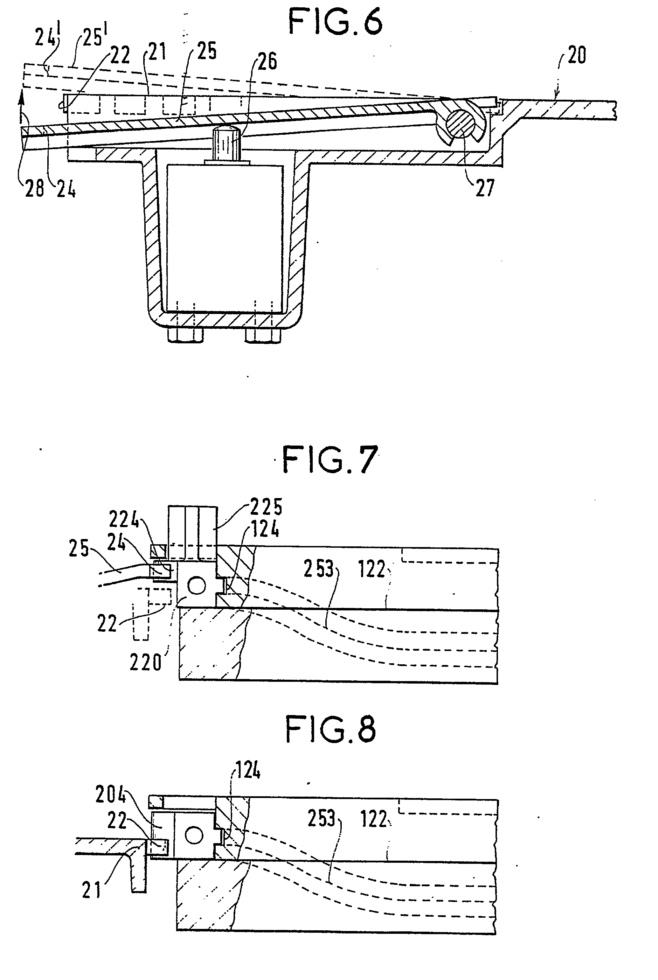

On retrouve tous ces éléments en vue de dessus agrandie dans la figure 5. En cas de non excitation de l'électro-aimant 26, la dent 24 se situe devant la dent 22 dans le même plan qu'elle ou en dessous. En cas d'excitation de l'électro-aimant 26 (cf figure 6), le bras 25 supportant la dent 24 est poussé vers le haut dans le sens de la flèche 28, pour parvenir à la position 25'-24' illustrée en pointillés, et située à un niveau supérieur à celui des dents 21-22.

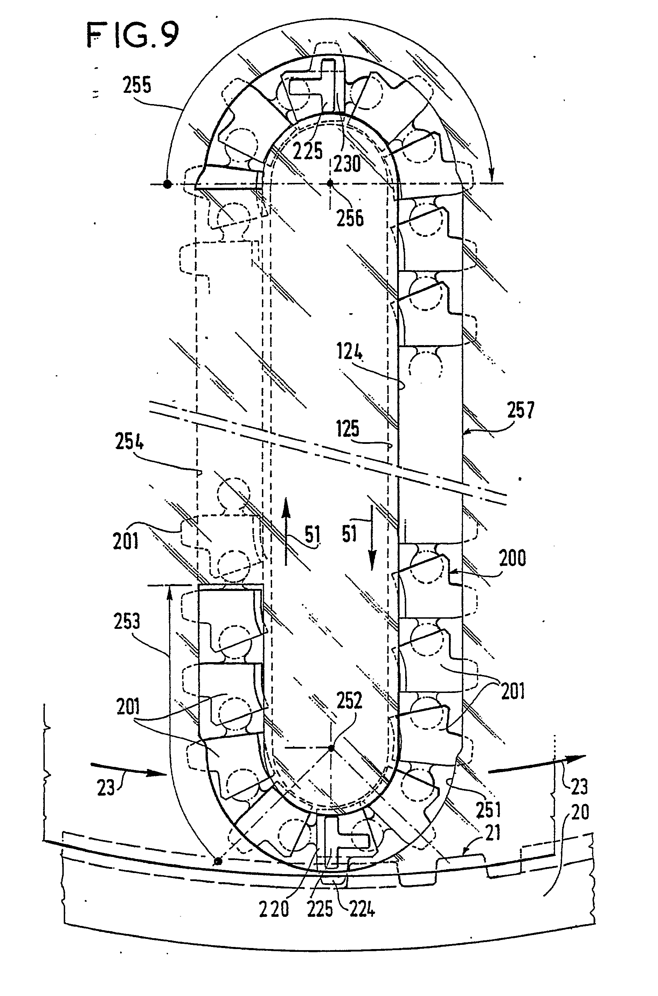

L'organe de commande d'extraction d'objet 20 est destiné à coopérer avec une portion d'engrenage appartenant à des chaînes 200 situées respectivement sous les fonds 122 de chaque logement 111, 112, 113 des magasins annulaires 10 (voir figure 4). Une telle chaîne va être maintenant décrite en détail à l'aide des figures 9 à 15.

La chaîne 200 comporte une pluralité de maillons 201 identiques coopérant les uns avec les autres au moyen de rotules.

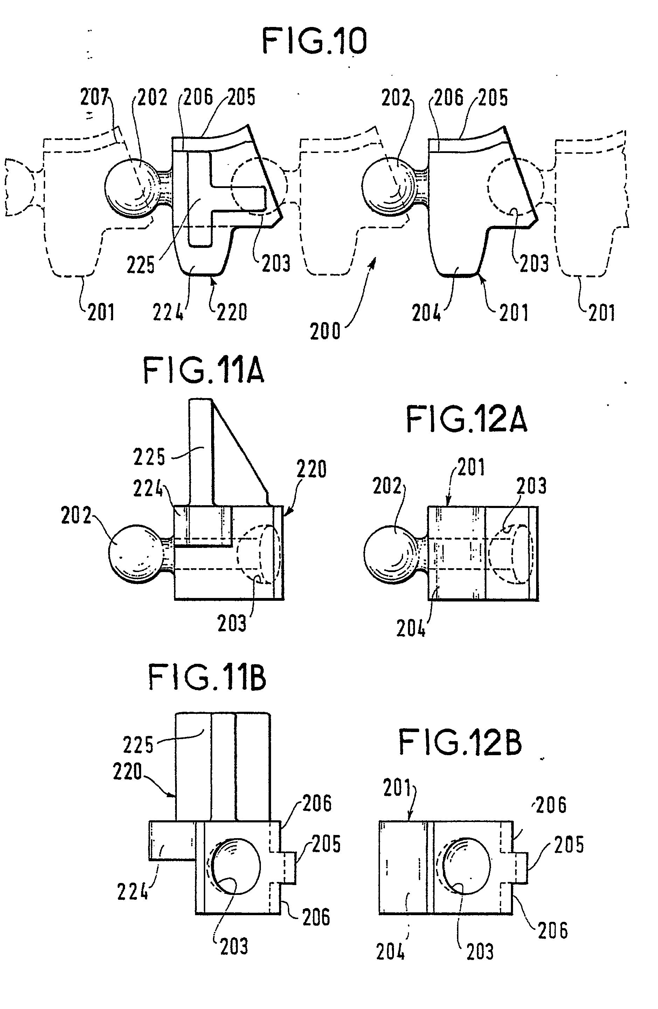

Un maillon 201 vu de dessus dans la figure 10 est montré en élévation dans la figure 12A avec sa rotule 202 et sa cavité 203, et en vue de côté dans la figure 12B. La portion 204 du maillon constitue une dent de la chaîne 200 tandis que les faces 205 et 206 constituent les faces de guidage de la chaîne dans sa rampe. On voit dans la figure 12B que la dent 204 fait toute la hauteur du maillon 201.

La chaîne 200 comprend en outre deux maillons particuliers diamétralement opposés 220 et 230, mais de forme identique, destinés à l'extraction des objets.

On voit dans la figure 10 le maillon 220 en vue de dessus avec sa rotule 202, sa cavité 203 et sa dent 224. Dans la figure 11A on voit ce même maillon en élévation et dans la figure 11B en vue de côté. Il faut remarquer que la dent 224 du maillon 220 est coupée dans sa partie inférieure et donc tronquée vis-à-vis de la dent 204 des maillons 201 adjacents. Par contre, comme les maillons 201, les maillons 220 et 230 présentent des faces de guidage 205 et 206 ; ils sont munis chacun également, au-dessus du plan des maillons, d'un taquet d'éjection 225.

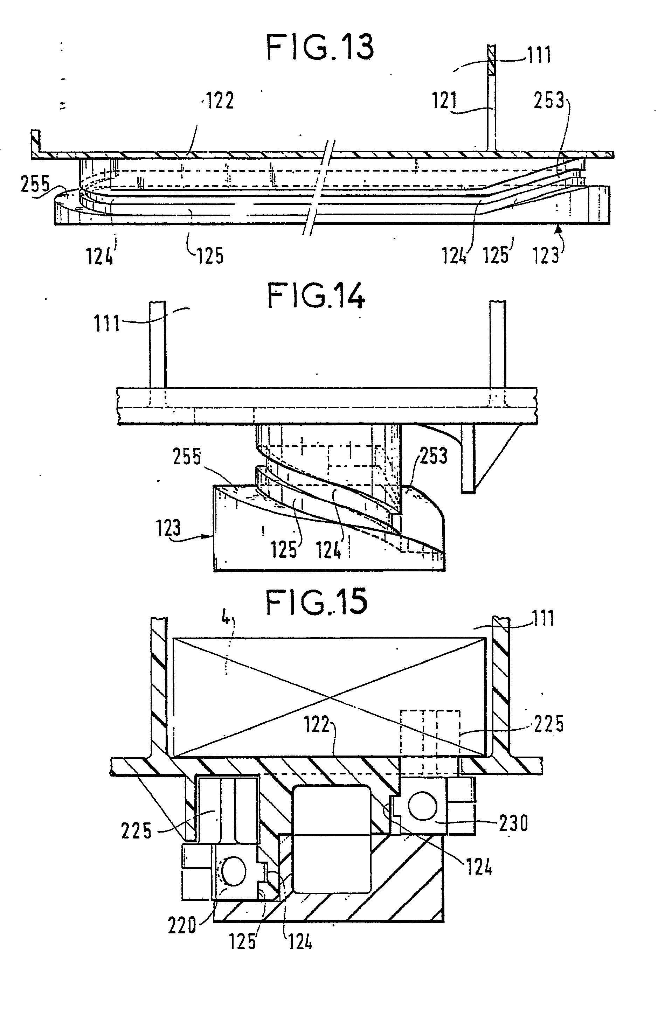

La chaîne des figures 9 et 10 est destinée à coopérer avec une rampe visible dans les figures 13 et 14 et, lorsqu'elle s'y trouve, elle se présente en vue de dessus comme dans la figure 9.

On voit dans la figure 13 un logement 111 avec son fond 122 et son ouverture 121 permettant l'évacuation d'un objet vers l'extérieur. Ce fond porte un support 123 définissant une rampe pour la chaîne 200 et notamment par ses faces 124 et 125 formant une rainure et destinées à venir respectivement au contact des faces 205 et 206 des maillons de la chaîne 200. La rainure ainsi formée ne se situe pas dans un plan horizontal, car il est indispensable qu'au cours de l'extraction un seul taquet éjecteur 220 ou 230 se trouve au-dessus du niveau du fond 122 pour pousser l'objet.

On observe donc (figure 9) une première zone d'extrémité 251 de la chaîne formant un demi-cercle de centre 252, puis une zone 253 où la rampe descend par rapport au plan de la première zone jusqu'à un niveau où la zone 254 de la chaîne permet d'escamoter complètement la partie supérieure d'un taquet éjecteur 220 ou 230. On trouve à nouveau une zone 255 en forme de demi-cercle de centre 256 à partir duquel le taquet peut émerger à nouveau de sa fente, et une zone linéaire 257 se raccordant à la zone circulaire 251.

La portion de fente illustrée en trait plein dans la figure 9 apparaît également en trait plein dans la figure 4 au niveau des fonds des logements 111, 112, 113.

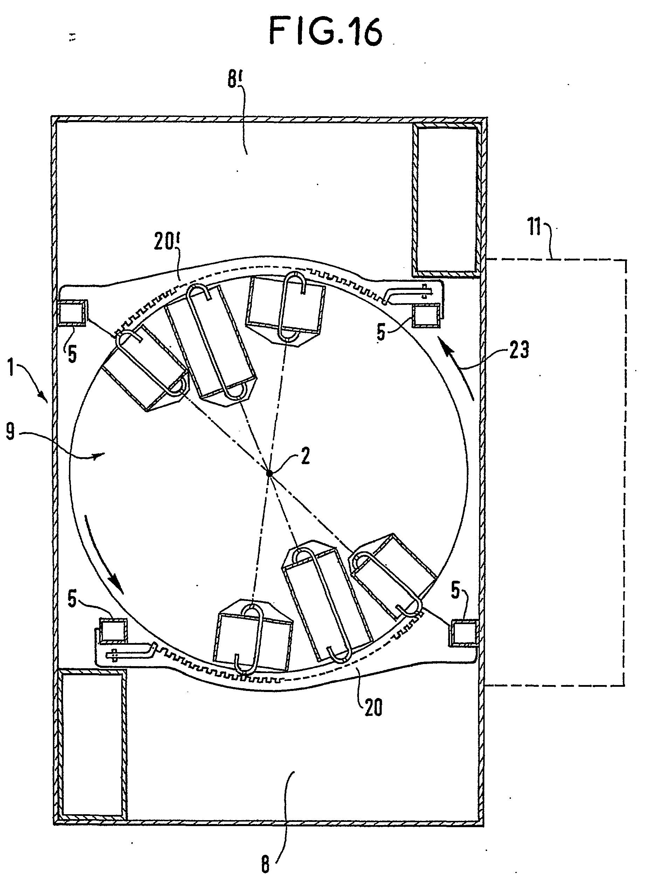

La situation des deux taquets apparaît clairement dans la figure 15 où l'on voit le taquet 230 jouer son rôle d'éjecteur du paquet 4 tandis que le taquet 220 est escamoté sous le fond 122.

Le dispositif selon l'invention fonctionne de la manière suivante : Chaque logement 111 est défini par l'étage de son magasin 10 et une valeur codée de l'angle de rotation du moteur 3. La structure cylindrique 9 tourne dans le sens indiqué par la flèche 23 (figures 1 et 5).

En cas de non commande, la dent 24 de l'organe 20 est en position basse et ne vient pas attaquer les chaînes 200.

En cas de commande, la dent 24 de l'organe est commandée en position haute par l'électro-aimant 26 (voir figure 6) juste avant le passage du magasin 111 (voir figure 7). Elle se trouve alors en contact avec la dent tronquée 224 du maillon éjecteur 220 (cf position de la figure 7); au fur et à mesure que le magasin tourne autour de son axe 2, elle commence à entraîner la chaîne 200 ; les dents 22 puis 21 du secteur denté prennent ensuite le relais et attaquent les dents 204 des maillons ordinaires 201 (voir figure 8).

Pendant ce temps (voir figure 9), la chaîne 200 fonctionne dans le sens des flèches 51, le taquet 220 disparaît sous le fond 122 au niveau de la zone 254 tandis que le taquet 230 joue son rôle d'éjecteur et pousse l'objet 4 vers la sortie 121 du logement ; l'objet tombe dans la zone de réception 8.

A la fin de l'extraction, c'est le maillon 230 qui est à la place du maillon 220 de la figure 9.

De préférence tous les maillons sont réalisés en matière plastique moulée.

On peut envisager que les maillons coopèrent entre eux par un autre type d'assemblage que le type à rotule.

La chaîne selon l'invention est particulièrement avantageuse car elle ne nécessite pas la mise en oeuvre d'engrenage. Bien entendu selon une autre variante, il pourrait être prévu d'en placer au niveau des centres 252 et 256 sans sortir du cadre de l'invention. De toute manière cette chaîne coopère avec l'organe de commande d'extraction 20 sans aucun système d'engrenages intermédiaire, ce qui présente un grand intérêt mécanique.

En variante on peut envisager, comme dans la figure 16, de disposer autour de la structure cylindrique 9, un second organe de commande d'extraction 20' avec sa zone de réception 8', ou même un troisième organe schématisé par un rectangle 11 en pointillés et un quatrième, de manière à servir plusieurs clients simultanément.

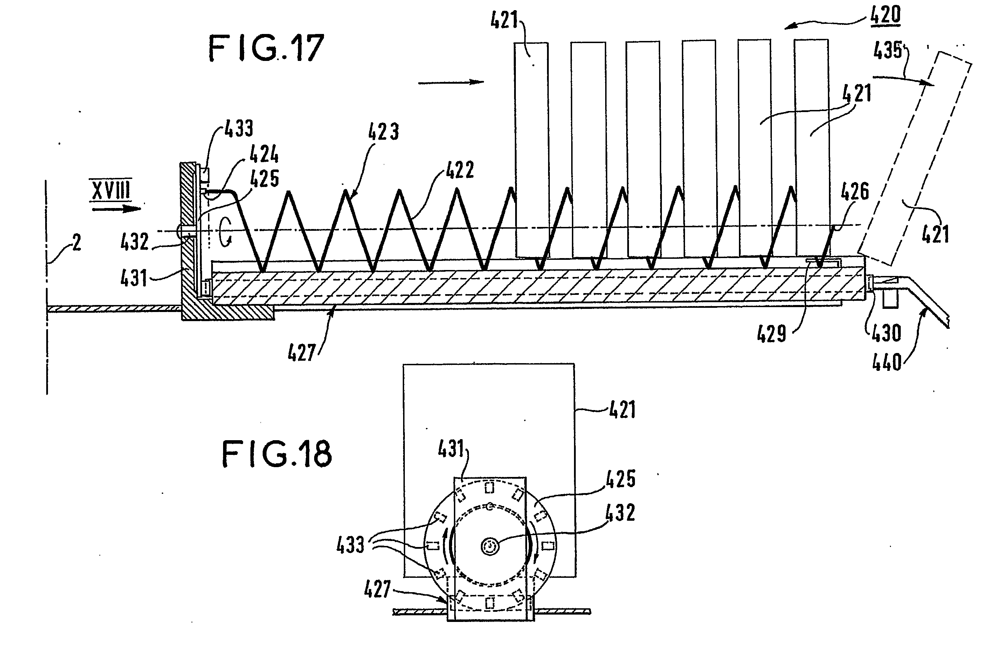

Dans la variante de réalisation illustrée dans les figures 17 à 21, les logements sont prévus pour stocker une file de boîtes.

Dans la figure 17 on voit une file 420 de boîtes 421 intercalées entre les spires 422 d'un ressort 423, dont une première extrémité 424 est fixée sur une roue verticale 425, et dont l'autre extrémité libre 426 est maintenue dans un guide 429. Le fond 427 du logement contient une chaîne 430 analogue à la chaîne 200 décrite précédemment, mais logée non plus dans une rampe avec déclivité, mais dans une rainure horizontale. A titre d'exemple, la chaîne 430 comprend soixante maillons dont cinq ont une dent tronquée comme la dent 224 de la figure 11B.

La roue 425, solidarisée à un support 431, est susceptible d'être entraînée en rotation par l'intermédiaire de picots 433 autour de son axe 432. Ces picots coopèrent avec les dents de la chaîne 430, au moment où les dents situées à l'opposé du logement coopèrent avec l'organe de commande d'extraction 440 disposé de façon fixe comme dans la figure 4. Dans l'exemple choisi, la roue 425 porte douze picots.

Lorsqu'une boîte 421 doit être extraite de son logement, l'organe 440 fonctionne au moment où le logement passe devant lui et engrène une dent tronquée de la chaîne 430, puis les autres dents ; du côté opposé les dents de la chaîne font tourner d'un tour la roue 425, et par là-même le ressort 423 et sa dernière spire 426 qui libère la première boîte de la file, cette boîte basculant alors dans le sens de la flèche 435.

Lorsque l'opération d'extraction est terminée, une dent tronquée se retrouve à nouveau au droit de l'organe de commande d'extraction 440.

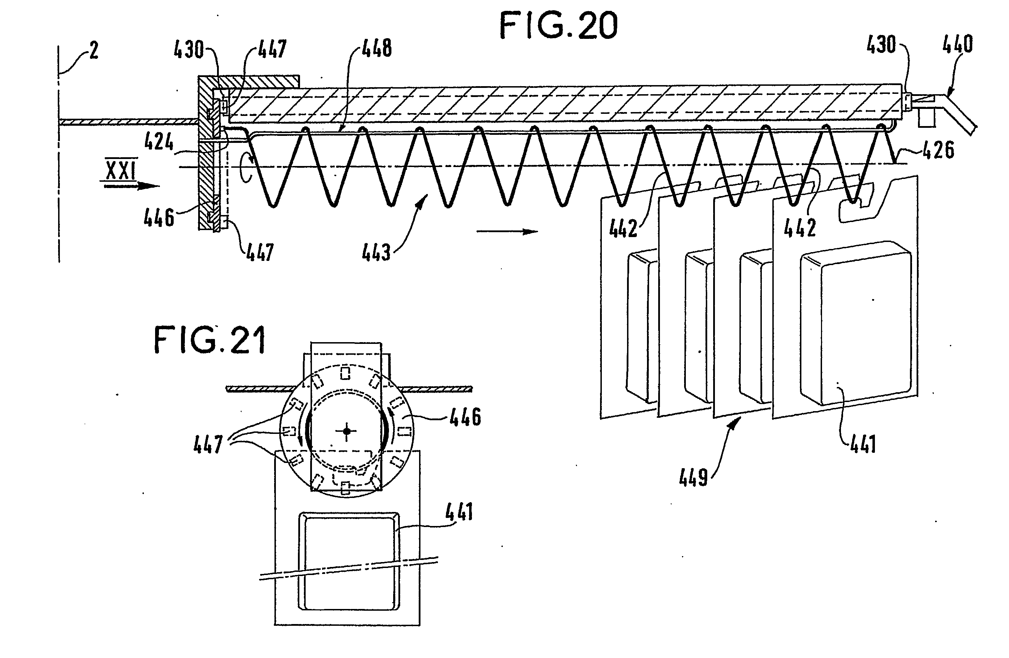

Dans les figures 20 et 21, on a un logement destiné à contenir une file 449 de blisters 441. Ces blisters sont accrochés au niveau des parties basses des spires 442 d'un ressort 443 accroché sur une barre 448 au niveau du plafond du logement.

Dans ce plafond se trouve une chaîne 430 tout à fait semblable à celle de la figure 17 et destinée à coopérer avec un organe de commande d'extraction 440. Comme dans la variante précédente une extrémité 424 du ressort est solidarisé à une roue 446 portant des picots 447. Comme précédemment, ces picots coopèrent avec les dents de la chaîne 430 lorsque l'organe de commande d'extraction 440 fonctionne. La roue 446 et le ressort 448 font un tour et le premier blister 441 se dégage de la spire 426 et de la file 449.

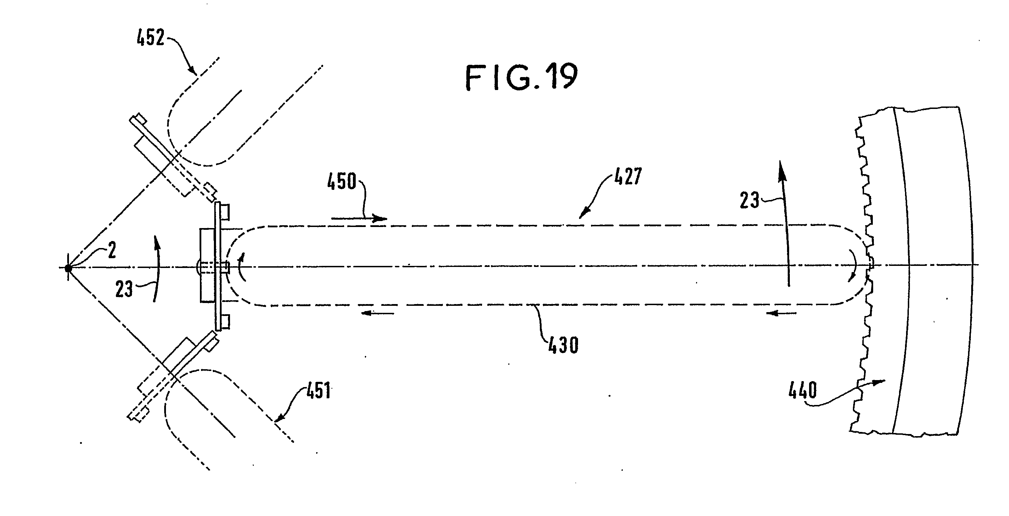

On voit en vue de dessus dans la figure 19, l'axe 2 de l'ensemble cylindrique des magasins, et le sens de rotation 23 de cet ensemble vis-à-vis de l'organe de commande d'extraction 440. On a mentionné de manière très schématique une chaîne 430 et son mouvement par la flèche 450. En pointillés 451 et 452 sont figurés des logements adjacents.

Dans toutes les variantes mentionnées ci-dessus, la structure cylindrique formée par les magasins annulaires était mobile en rotation vis-à-vis des organes de commande d'extraction extérieure à la structure. Dans les variantes dont la description va suivre, la structure cylindrique des magasins annulaires est fixe et les organes de commande d'extraction sont mobiles en rotation à l'intérieur de la structure cylindrique.

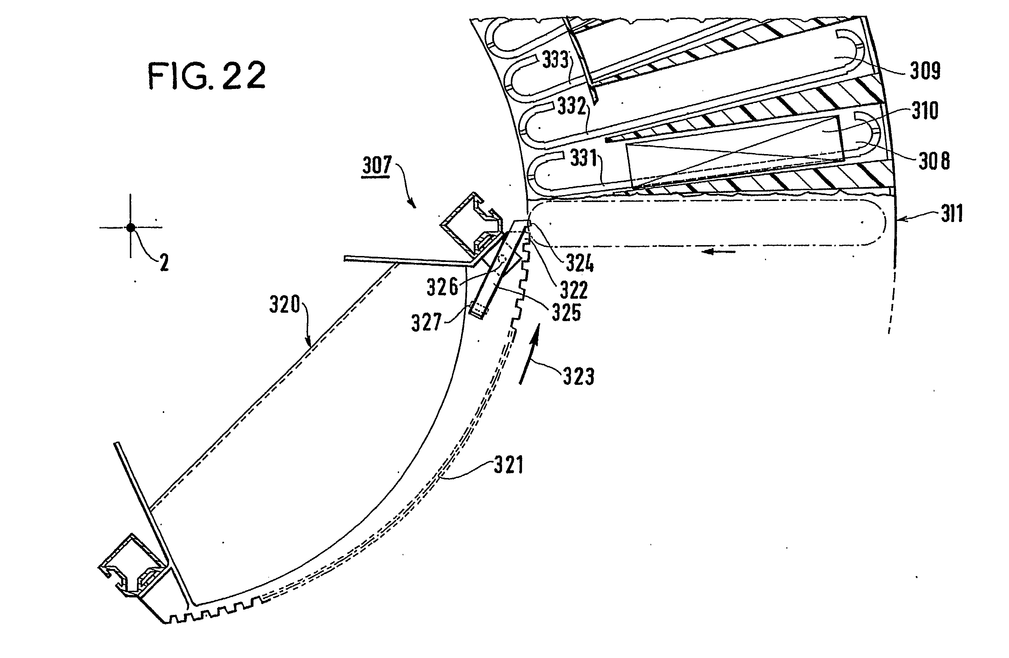

Ainsi, dans la variante des figures 22, 23, 24, on a un bâti 307 supportant une pluralité de magasins annulaires fixes d'axe 2, tels que le magasin 311 vu partiellement dans la figure 22. Le magasin 311 est muni de logements radiaux 308, 309, contenant chacun un empilement d'objets tels que la boîte référencée 310 située à la partie inférieure d'un empilement.

La commande de l'extraction est assurée à chaque étage par un organe de commande d'extraction 320, situé à l'intérieur du cylindre défini par les magasins annulaires et entraîné en rotation autour de l'axe 2 dans le sens de la flèche 323 par un moteur pas à pas ou un moteur associé à un codeur d'angle. Les organes 320 de tous les étages sont solidarisés entre eux.

L'organe de commande d'extraction 320 comporte essentiellement un secteur métallique denté sur sa périphérie 321, dont la première dent est référencée 322. Devant cette dent est prévue une dent mobile 324 portée par un bras 325 pivotant autour d'un axe 327 par la mise en oeuvre d'un électro aimant 326.

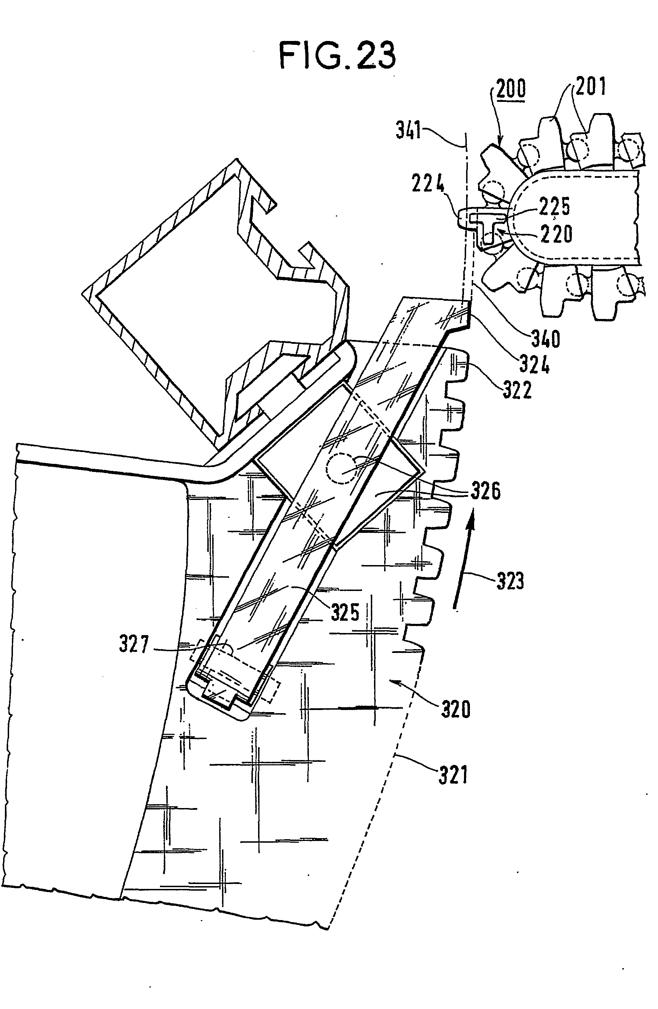

On retrouve tous ces éléments en vue de dessus agrandie dans la figure 23.

Lorsque l'ensemble 320 tourne, le bord extérieur des dents 321 suit une trajectoire 340 dans un plan horizontal. En cas de non excitation de l'électro-aimant 326, la dent 324 se situe devant la dent 322 dans le même plan qu'elle ; elle suit la même trajectoire 340 ou éventuellement une trajectoire analogue dans un plan inférieur. En cas d'excitation de l'électro-aimant 326, le bras 335 supportant la dent 324 est poussé vers le haut jusqu'à un niveau supérieur à celui du secteur denté 321.

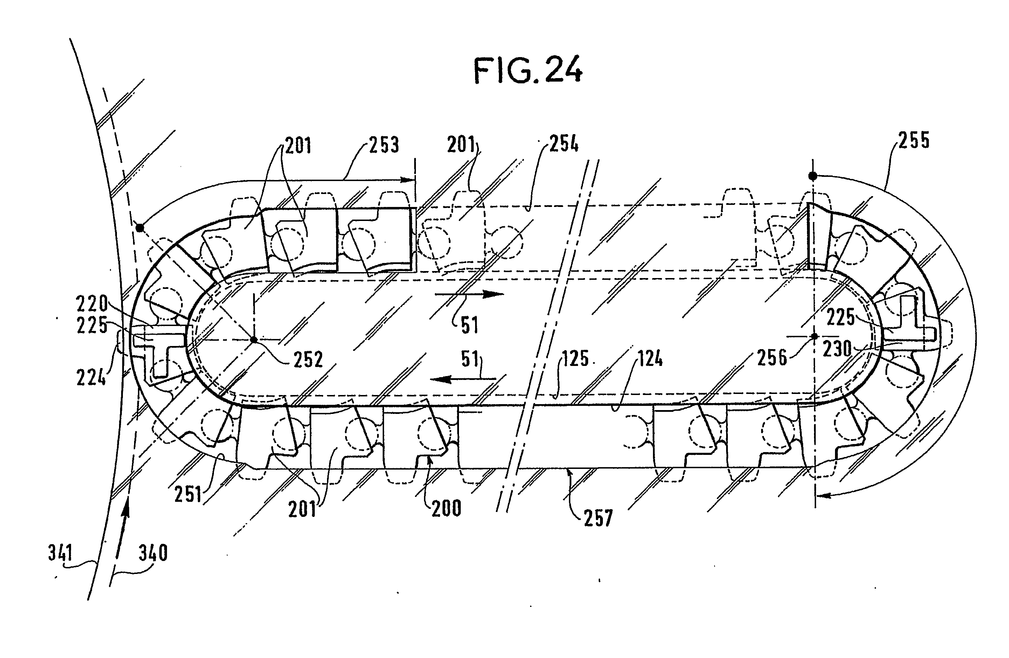

L'ensemble de commande d'extraction d'objet est destiné à coopérer avec des chaînes 200 situées respectivement sous les fonds 331, 332, 333 de chaque logement des magasins annulaires (cf figure 22). La chaîne 200 apparaissant dans la figure 24 est tout à fait analogue à celle qui a été décrite à l'aide des figures 9 à 15 ; les mêmes nombres de références ont été repris pour des éléments identiques. On voit toutefois dans la figure 24 que les trajectoires 340 et 341 des dents de l'organe de commande d'extraction 320 ne sont pas orientées de la même manière par rapport à la chaîne 200 que dans la variante de la figure 9.

Dans la variante qui va être décrite ci-dessous, la chaîne à maillons va être remplacée par un autre dispositif à transmissioin de mouvement équivalent dans son principe.

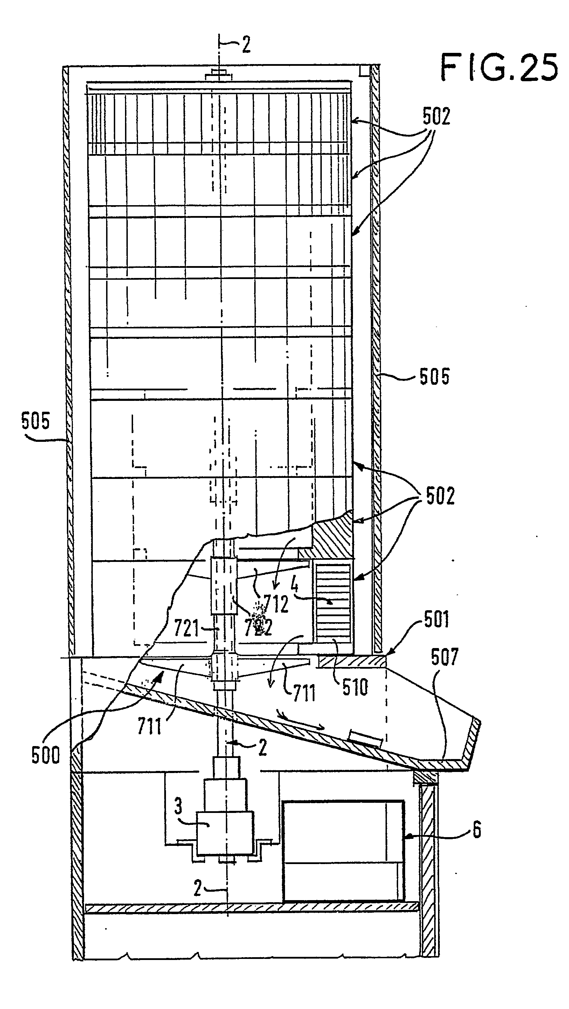

On retrouve dans la figure 25 une vue d'ensemble schématique semi-arrachée d'un autre exemple de dispositif selon l'invention. On a représenté un bâti 501 supportant une pluralité de magasins annulaires fixes 502, qui seront décrits en détail plus loin. Ces magasins sont superposés de manière à avoir leurs axes de symétrie confondus suivant l'axe référencé 2. Les magasins précités sont munis de logements radiaux contenant chacun un empilement 4 d'objets d'un type prédéterminé ; on a référencé 510 l'objet situé à la partie inférieure de l'empilement 4. Comme on le verra plus loin, chaque logement est muni de moyens d'extraction de son objet 510. La commande de l'extraction est assurée par un ensemble unitaire de commande 500 situé à l'intérieur du cylindre défini par les magasins annulaires et entraîné en rotation autour de l'axe 2 par un moteur pas à pas 3 ou un moteur à codeur d'angle. L'ensemble est piloté par un ordinateur programmé 6. Les objets extraits du dispositif de stockage sont récupérés dans la zone de réception 507. Un capot protecteur de l'ensemble des magasins a été référencé 505.

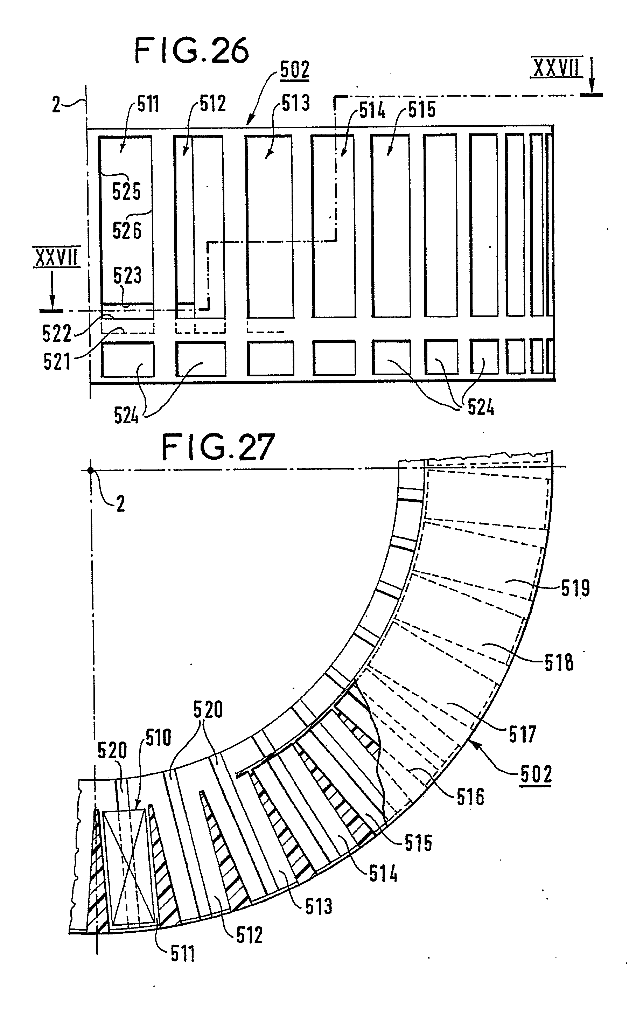

On voit dans les figures 26 et 27 respectivement une vue partielle en élévation et une vue de dessus semi-coupée d'un magasin annulaire, par exemple le magasin 502.

Dans sa partie supérieure, le magasin 502 présente par exemple une quarantaine de logements radiaux ; on en a référencé neuf de 511 à 519. Le fond 521 de chaque logement est muni d'une fente 520 visible sur la figure 27. La paroi extérieure de chaque logement est ouverte de manière à permettre le réapprovisionnement en objets ; elle peut présenter un rebord 522 pour bloquer l'objet 510 le plus bas de l'empilement. La paroi de chaque logement située près de l'axe 2 présente une fente 523 communiquant avec la fente 520 de manière à permettre la sortie de l'objet 510 vers l'axe 2 du dispositif. Les parois latérales 525 et 526 de chaque logement servent de guides à l'empilement.

Bien entendu, la largeur de chaque logement est adaptée à la largeur de l'empilement des objets, et la hauteur de la fente 523 est adaptée à l'épaisseur de chaque objet.

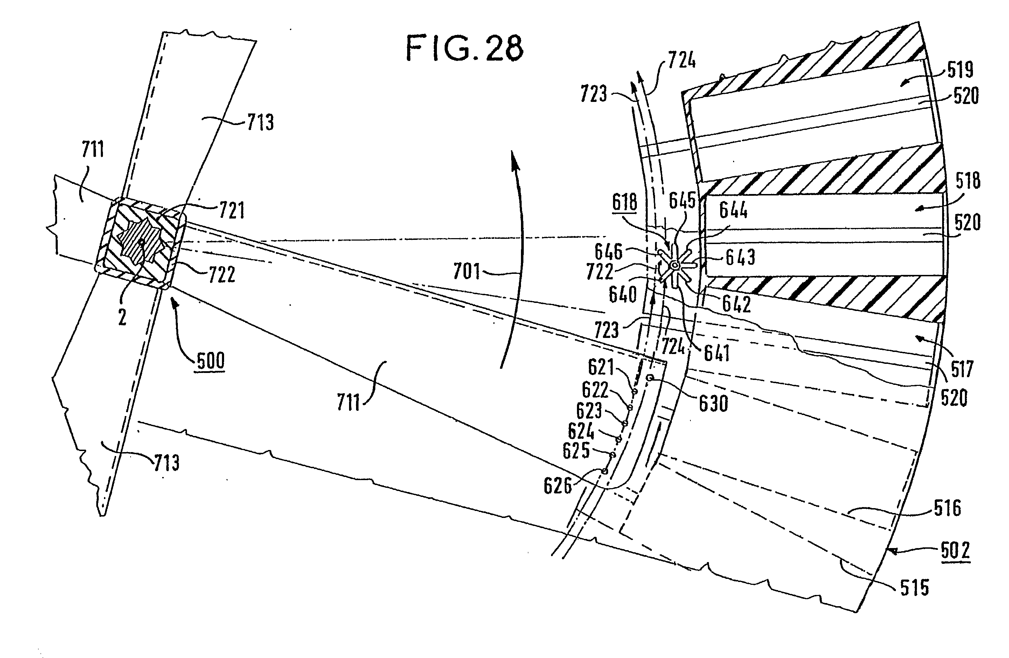

Dans sa partie inférieure, chaque magasin est muni d'un compartiment 524 communiquant avec le logement correspondant par l'intermédiaire d'une fente 520, et qui a pour fonction de loger des moyens d'extraction de l'objet 510. Ces moyens d'extraction sont visibles sur les figures 28 à 31.

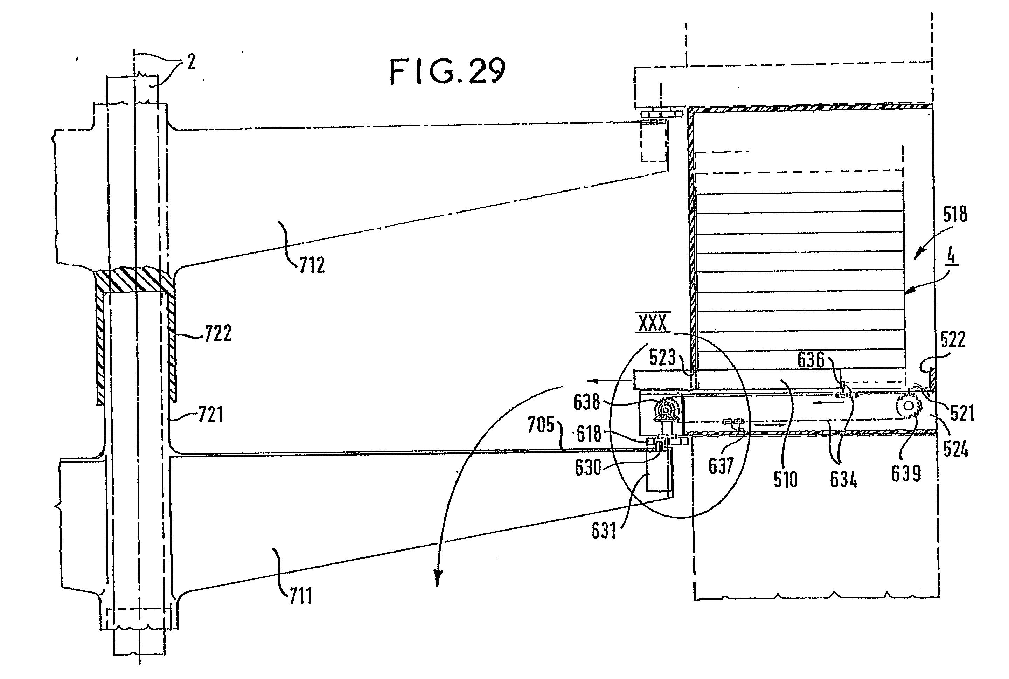

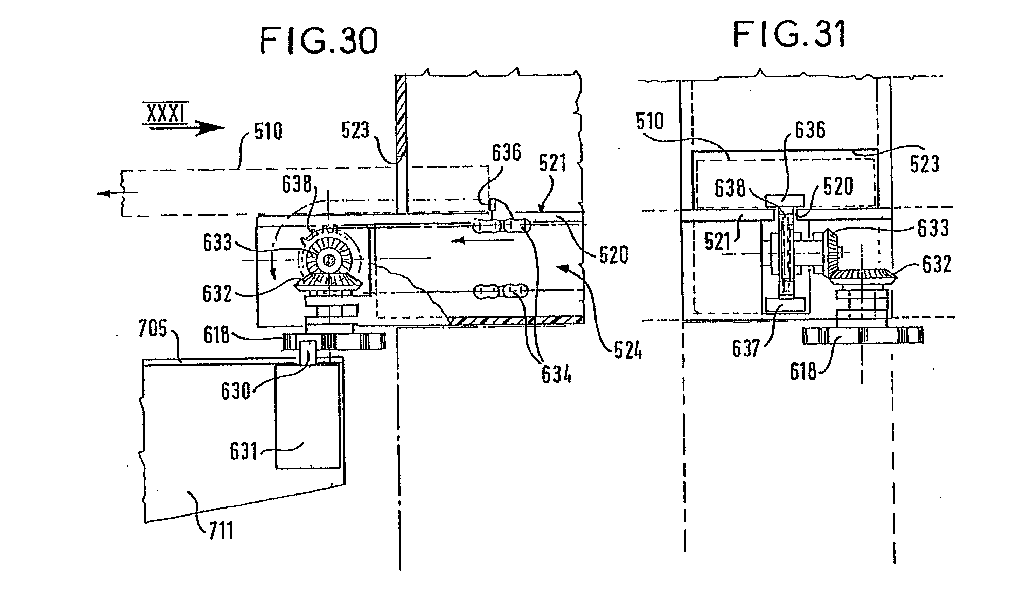

On retrouve dans la figure 28 en vue de dessus les logements 516 à 519 et les fentes 520 du magasin annulaire 502. Le logement 518 est vu latéralement dans la figure 29 avec son empilement d'objets 4 reposant sur le fond 521, son rebord extérieur 522, son ouverture d'évacuation 523 pour la sortie de l'objet 510. Le compartiment 524 associé contient un dispositif mécanique à transmission de mouvement comprenant :
- une roue 618 (figure 28) à sept dents référencées 640 à 646 susceptible d'être entraînée en rotation suivant la flèche 722, une dent manquant entre les dents 640 et 646,
- des engrenages 632, 633 (voir figures 30 et 31) situés au-dessus de la roue 618 et susceptibles d'être entraînés par la rotation de cette dernière,
- des roues dentées 638, 639, dont l'une (la roue dentée 638) est entraînée par l'engrenage 633, supportant une chaîne 634 portant des taquets 636 et 637 susceptibles de circuler dans la fente 520.

Tous les logements de tous les magasins annulaires sont munis des moyens d'extraction qui viennent d'être décrits.

On va décrire maintenant la commande de ces moyens d'extraction.

Les figures 25, 28, 29, 30, 31 illustrent un premier mode de réalisation.

A chaque magasin, c'est-à-dire à chaque étage du dispositif de stockage est associé au moins un bras de commande. Dans l'exemple présent on en a illustré quatre, d'une part deux bras 711 diamétralement opposés et d'autre part deux bras 713 diamétralement opposés, formant un angle droit avec les deux bras 711. Ces bras sont portés par un axe 721, l'axe 722 des bras 712 de l'étage adjacent étant encastré dans l'axe 721. L'ensemble des axes est entraîné simultanément en rotation autour de l'axe 2 par le moteur pas-à-pas 3. Comme on le voit sur la figure 28, le bras 711, comme tous les bras analogues, est muni d'une série de six doigts fixes 621 à 626 situés dans un plan horizontal sur un cercle 723 centré sur l'axe 2, et d'un doigt escamotable 630 situé sur un cercle 724, également centré sur l'axe 2 dans le même plan, mais de diamètre légèrement plus grand. Dans la figure 29, le doigt 630 est en position sortie ; en position normale, il est escamoté et ne dépasse pas le plan horizontal 705 du bras 711 ; il est commandé par un électro-aimant 631.

Le dispositif selon l'invention fonctionne de la façon suivante : chaque logement a une adresse correspondant à l'étage de son magasin et à une position déterminée en rotation du moteur pas à pas. On suppose que l'objet 510 à extraire se trouve dans le logement 518 du magasin 502 (voir figure 28). Le bras 711 destiné à extraire l'objet 510 tourne avec ses doigts fixes et son doigt 630 escamoté ; les doigts parcourent dans le sens de la flèche 701 respectivement les trajectoires circulaires 723 et 724 et ne rencontrent aucune roue analogue à la roue 618. Par contre, lorsque le bras 711 arrive au niveau du magasin 518 concerné, le doigt 630 sort de son logement et, sur sa trajectoire 724, rencontre la dent 640, ce qui a pour effet d'entraîner la roue 618 en rotation ; les doigts fixes 621 à 626 continuent cette rotation par des rencontres successives avec les dents 641 à 646. On se trouve dans la position d'entraînement de la chaîne 634 et de ses taquets 636 et 637 (voir figures 30 et 31). Les engrenages 632 et 633 sont calculés de manière à assurer une course suffisante du taquet 646 pour sortir l'objet 510.

A titre d'exemple :
- Le moteur pas-à-pas fait un tour toutes les quatre secondes, avec 400 pas au tour.
- Le dispositif comporte 10 magasins annulaires avec 40 logements chacun : ce qui fait un stockage de 400 types d'objets différents.
- L'ensemble des magasins annulaires superposés fait environ 1,50 m de hauteur et 1 m de diamètre. Ils sont de préférence en matière plastique moulée, ainsi que les bras de l'ensemble unitaire de commande.

Si on met en oeuvre deux bras par étage, on peut atteindre en deux secondes 400 objets. Un des bras peut être affecté aux objets pairs, et l'autre aux objets impairs.

Si l'on met en oeuvre quatre bras, ou davantage par étage, on peut réduire la vitesse de rotation du moteur.

Dans une officine, le nombre de médicaments atteints en 2 secondes sera celui correspondant à une ordonnance.

On obtient donc des performances très intéressantes de distribution, par la mise en oeuvre d'une structure dont les composants sont tous très économiques.

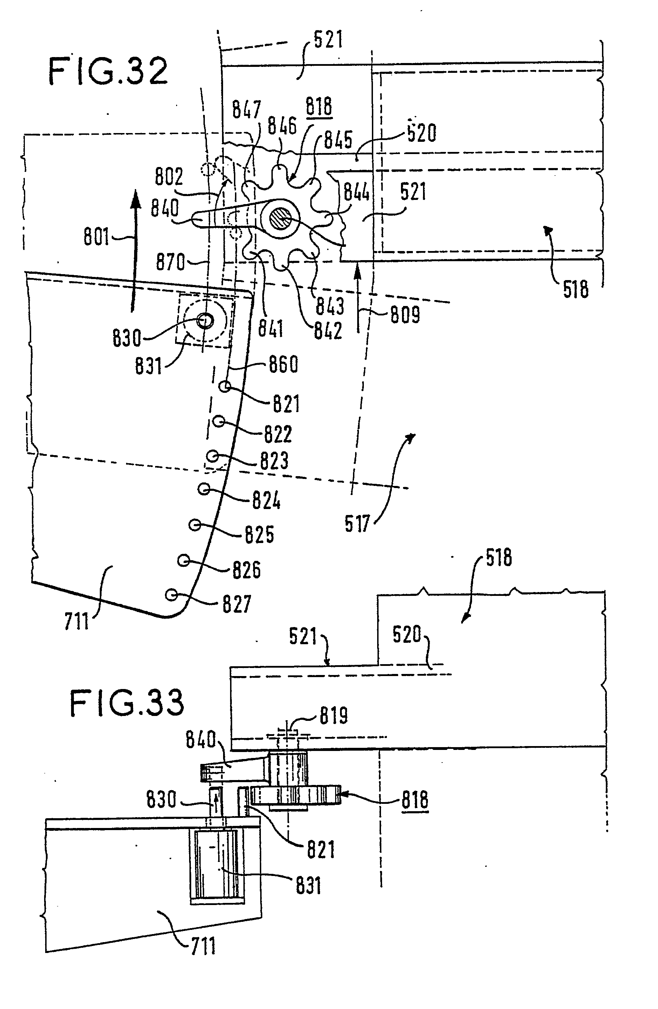

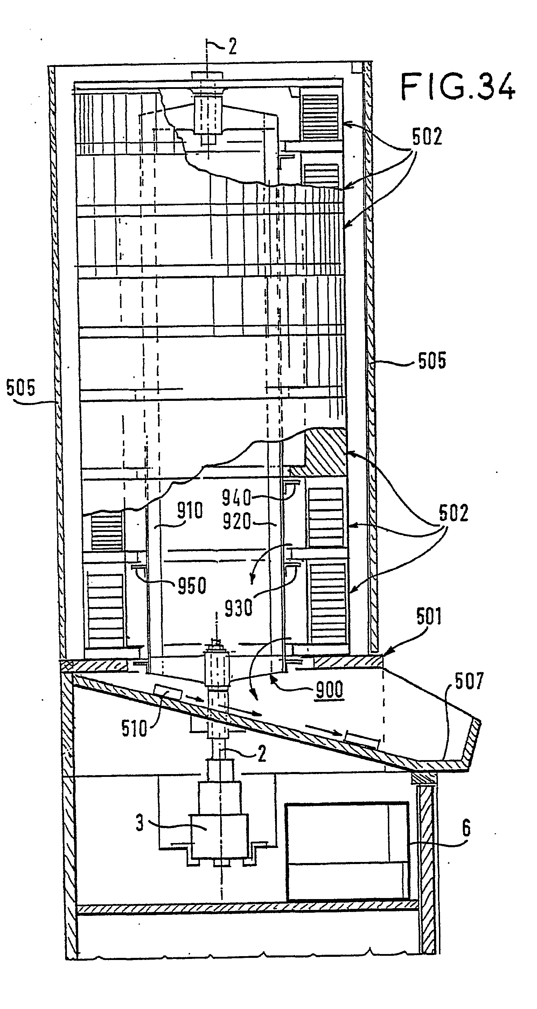

On a montré dans les figures 32 et 33 une variante de réalisation des moyens de commande du mouvement de la chaîne d'extraction des objets.

On retrouve le logement 518, la fente 520 dans le fond 521, et le bras 711 entraîné en rotation dans le sens de la flèche 801. Dans cette variante, le doigt escamotable 830 commandé par l'électro-aimant 831 a une trajectoire circulaire 870 de diamètre inférieur à celui de la trajectoire 860 des doigts fixes 821 à 827. La roue 818 d'axe 819 appartenant au dispositif mécanique de transmission de mouvement du logement 518, est munie d'une dent 840 plus longue que les autres dents 841 à 847, située au droit d'une dent manquante et au-dessus du plan des autres dents (voir figure 33).

Il apparaît clairement sur les figures que, si un objet 510 du compartiment 518 doit être sorti, le doigt 830 en position sortie attaque la dent 840, entraîne en rotation 802 la roue 818, les autres doigts 821 à 827 prenant le relais vis-à-vis des dents 841 à 847, de manière à ce que la roue 818 revienne dans sa position initiale.

La figure 34 montre une variante de l'ensemble unitaire de commande des moyens d'extraction.

On n'a plus de bras portés par un axe commun, mais une cage 900 tournant sur elle-même autour de l'axe 2, à l'intérieur des magasins annulaires 502, et comprenant par exemple deux, quatre, ou huit barreaux verticaux. On a illustré sur la figure, deux barreaux 910 et 920. Au niveau de chaque étage, les barreaux supportent les doigts fixes et le doigt escamotable que l'on a décrits précédemment. On a dessiné très schématiquement cette commande par les zones référencées 930, 940, 950.

Le principe d'extraction est tout à fait identique à celui qui est décrit à l'aide des figures précédentes.

Bien entendu, l'invention n'est pas limitée aux quelques variantes décrites ci-dessus.

On pourra, sans sortir du cadre de l'invention remplacer tout moyen par un moyen équivalent.

## Revendications

1/ Dispositif de stockage et de distribution d'objets comportant une pluralité de magasins annulaires (10) superposés ayant un axe de symétrie commun (2) et formant une structure cylindrique (9) de révolution, chaque magasin annulaire (10) comportant une pluralité de logements (111, 112, 113) destinés à stocker au moins une boîte unitaire, et présentant une ouverture (121) pour laisser le passage à une seule boîte, caractérisé par le fait que chaque logement peut contenir soit une boîte unitaire, soit un empilement de boîtes, soit une file de boîtes, qu'il comprend dans son fond (122) ou son plafond des moyens d'extraction d'une boîte qu'il contient, ces moyens comprenant une chaîne (200) présentant au droit de ladite ouverture (121) une dent verticale tronquée (224), dont la base est située dans un premier plan horizontal, la base des autres dents verticales (204) étant située dans un second plan horizontal de niveau inférieur au premier, ledit dispositif comprenant en outre :

- au niveau de chaque magasin annulaire (10), au moins un organe de commande d'extraction (20) de ladite boîte, et constitué par un secteur plan denté (21) situé entre ledit premier et ledit second plan horizontal, ce secteur étant muni d'une première dent mobile commandable (24), située en cas de non commande d'extraction dans le même plan que les autres dents et en cas de commande d'extraction au-dessus dudit premier plan horizontal de manière à engrener ladite dent tronquée (224),

- un moteur pas à pas ou un moteur associé à un codeur d'angle pour entraîner en rotation autour de l'axe (2) de ladite structure (9), soit ladite structure (9) soit ledit organe de commande d'extraction (20),

- un ordinateur programmé pour commander ladite dent mobile (24) en fonction de sa position angulaire vis-à-vis dudit logement, ladite position angulaire étant déterminée par la rotation dudit moteur, l'extraction d'une boîte résultant du mouvement tournant relatif dudit secteur plan denté et desdits moyens d'extraction après engrenage de ladite dent tronquée.

2/ Dispositif de stockage et de distribution d'objets selon la revendication 1, caractérisé par le fait que ledit moteur pas à pas entraîne en rotation autour de l'axe (2) de ladite structure (9) ladite structure cylindrique de révolution (9) et que ledit organe de commande d'extraction (20) est disposé de façon fixe au niveau de chacun desdits magasins annulaires (10).

3/ Dispositif de stockage et de distribution d'objets selon la revendication 1, caractérisé par le fait que ladite structure cylindrique est disposée de façon fixe avec un espace cylindrique interne dans lequel se trouve, au niveau de chaque magasin annulaire (311), au moins un organe de commande d'extraction (320) l'ensemble des organes de commande d'extraction formant un ensemble unitaire susceptible d'être entraîné en rotation autour dudit axe (2) par ledit moteur.

4/ Dispositif selon l'une des revendications 1 à 3, caractérisé par le fait que chaque magasin (300) comporte des logements parallélépipédiques (301 à 305), disposés de façon sensiblement radiale vis-à-vis de l'axe (2) de ladite structure cylindrique (9).

5/ Dispositif selon la revendication 1, caractérisé par le fait que chaque magasin (400) constitue un plateau en forme de disque et que des logements parallélépipédiques de dimensions différentes (401 à 404) sont agencés de manière à couvrir la plus grande surface possible dudit plateau.

6/ Dispositif selon l'une des revendications précédentes, caractérisé par le fait que chaque magasin est formé d'une pièce unitaire venue de moulage.

7/ Dispositif selon l'une des revendications 1 à 5, caractérisé par le fait que chaque magasin est formé d'un plateau avec des logements rapportés.

8/ Dispositif selon l'une des revendications 1 à 3, caractérisé par le fait que lesdits logements (111 à 113) sont prévus pour stocker une boîte ou un empilement de boîtes, que le fond de chaque logement présente une fente débouchant dans ladite ouverture et dans une partie inférieure où est logée ladite chaîne (200) à taquets susceptibles de s'introduire dans ladite fente.

9/ Dispositif selon la revendication 8, caractérisé par le fait que ladite chaîne est constituée de maillons (201) coulissant sur une rampe fermée présentant deux portions rectilignes réunies par deux demi-cercles dont les axes sont sensiblement verticaux,

- que deux maillons (220, 230) diamétralement opposés portent chacun un taquet éjecteur (225) susceptible de s'introduire dans ladite fente,

- et que l'une desdites portions rectilignes de ladite rampe est en déclivité par rapport au plan dudit fond pour permettre l'escamotage d'un taquet (225) sous ledit fond tandis que l'autre taquet assure sa fonction d'éjection.

10/ Dispositif selon la revendication 9, caractérisé par le fait que la longueur dudit secteur denté est au moins égale à la demi-longueur de la chaîne la plus longue située dans un magasin.

11/ Dispositif selon la revendication 9, caractérisé par le fait que chaque maillon (201) coopère avec le maillon adjacent au moyen d'un emboîtement de type à rotule (202, 203).

12/ Dispositif selon la revendication 1, caractérisé par le fait que lesdits logements sont prévus pour stocker une file de boîtes (420) disposées entre les spires (422) d'un ressort (423), que chaque logement comporte dans son fond une chaîne (430) coopérant avec ledit organe de commande d'extraction (440), et coopérant d'autre part du côté opposé à l'ouverture d'évacuation du logement avec les picots (433) d'une roue verticale (425) à laquelle est fixée une extrémité (424) du ressort (423).

13/ Dispositif selon la revendication 1, caractérisé par le fait que lesdits logements sont prévus pour stocker une file (449) de blisters (441) accrochés à leur partie supérieure à la partie basse des spires (442) d'un ressort (443), que chaque logement comporte dans son plafond une chaîne (430) coopérant avec ledit organe de commande d'extraction (440), et coopérant d'autre part du côté opposé à l'ouverture d'évacuation du logement avec les picots (447) d'une roue verticale (446) à laquelle est fixée une extrémité (424) du ressort (443).

14/ Dispositif selon l'une des revendications 12 et 13, caractérisé par le fait que le nombre de picots de ladite roue et le nombre de dents verticales tronquées de ladite chaîne sont choisis de manière à faire faire un tour complet à ladite roue à chaque commande d'extraction.

15/ Dispositif de stockage et de distribution d'objets comportant :

- une pluralité de magasins annulaires superposés en position fixe, et ayant leur axe de symétrie commun, chaque magasin comportant une partie supérieure présentant des logements radiaux destinés à contenir chacun un empilement d'objets d'un type déterminé, la paroi de chaque logement la plus proche dudit axe présentant une ouverture pour le passage de l'objet situé au bas de l'empilement,
- un ensemble unitaire de commande de moyens d'extraction situé dans l'espace cylindrique intérieur aux magasins annulaires et entraîné en rotation autour dudit axe commun de symétrie par un moteur pas à pas ou à codeur d'angle, dispositif caractérisé par le fait que
- le fond de chaque logement présentant une fente (520) débouchant dans ladite ouverture (523) et dans une partie inférieure (524) où sont disposés pour chacun desdits logements des moyens d'extraction de l'objet (510) situé à la partie inférieure de l'empilement correspondant, ces moyens comprennent un dispositif mécanique à transmission de mouvement muni d'une chaîne (634) à taquets (636, 637) susceptibles de s'introduire dans ladite fente (520),
- ledit ensemble unitaire de commande d'extraction (500) porte à chaque étage correspondant à un magasin au moins un bras (711), une première extrémité du bras portant un axe (721) coïncidant avec ledit axe de symétrie, encastré dans l'axe du bras situé au niveau supérieur ou intérieur au sien, l'extrémité opposée dudit bras portant un organe mécanique commandable comprenant un doigt escamotable (630) décrivant une trajectoire circulaire au cours du mouvement dudit ensemble unitaire et susceptible pendant son mouvement d'entraîner ou non ledit dispositif à transmission de mouvement, ledit dispositif comprenant en outre un ordinateur programmé prévu pour commander ledit organe mécanique en fonction de sa position angulaire vis-à-vis dudit logement (511 à 515), ladite position angulaire étant définie par ledit moteur pas à pas, ou à codeur d'angle (3).

16/ Dispositif de stockage selon la revendication 15, caractérisé par le fait que ledit dispositif à transmission de mouvement comprend une roue (818) dont une dent seulement (840) est sur la trajectoire dudit doigt escamotable (830).

17/ Dispositif de stockage selon la revendication 16, caractérisé par le fait que ladite roue (818) comporte d'autres dents (841 à 847) susceptibles de coopérer avec des doigts fixes (821 à 827), disposés à proximité dudit organe mécanique commandable (830), lors du mouvement de ces derniers sur une trajectoire circulaire de diamètre distinct de celui de la trajectoire dudit doigt escamotable.

18/ Dispositif de stockage selon la revendication 17, caractérisé par le fait que ladite roue (618) transmet son mouvement, par l'intermédiaire d'un ensemble d'engrenages (632, 633) à ladite chaîne à taquets (634).

## Claims

1. A device for storing and dispensing objects comprising a plurality of annular magazines (10) having a common axis of symmetry (2) and forming a circular cylindrical structure (9), each annular magazine (10) comprising a plurality of housings (111, 112, 113) for storing at least one single box and having an opening (121) for allowing a single box to pass therethrough, characterized in that each housing is intended to contain either a single box, or else a stack of boxes, that it includes means in its bottom (122) or its ceiling for extracting a box contained therein, said means including a chain (200) having, level with said opening (121), a vertical truncated tooth (224) whose base is situated in a first horizontal plane, with the bases of the other vertical teeth (204) being situated in a second horizontal plane at a lower level, said device further comprising:

- at least one extraction control member (20), level with each annular magazine (10) for controlling the extraction of a box, and constituted by a plane toothed sector (21) situated between said first and said second horizontal planes and provided with a first controllable moving tooth (24) situated at the same level as the other teeth in a non-extraction position and at a level above said first horizontal plane in an extraction position so as to mesh with said truncated tooth (224),
- a stepper motor or a motor associated with an angle encoder for rotating said cylindrical structure (9) or said extraction control member (20) about the axis (2) of said structure (9),
- a programmed computer for controlling said moving tooth (24) as a function of its angular position relative to said housing, said angular position being determined by the rotation of said motor, the extraction of a box resulting from the relative rotation of said toothed plane sector and said extraction means when said truncated tooth has been engaged.

2. A device for storing and dispensing objects according to claim 1, characterized in that said stepper motor drives said circular cylindrical structure (9) in rotation about the axis (2) of said structure (9) and that said extraction control member (20) is stationarily arranged at the level of each of said annular magazines (10).

3. A device for storing and dispensing objects according to claim 1, characterized in that said cylindrical structure is stationarily arranged and is provided with an inner cylindrical space in which at least one extraction control member (320) is disposed at the level of each annular magazine (311), the set of extraction control members constituting a single assembly which is conceived to be rotated by said motor about said axis (2).

4. A device according to one of claims 1 to 3, characterized in that each magazine (300) comprises parallelepipedic housings (301 to 305) disposed substantially radially relative to the axis (2) of said cylindrical structure (9).

5. A device according to claim 1, characterized in that each magazine (400) constitutes a disk-shaped tray and that generally parallelepipedic housings of different sizes (401 to 404) are disposed in such a manner as to occupy as large an area as possible of said tray.

6. A device according to one of the preceding claims, characterized in that each magazine is constituted by a single molded part.

7. A device according to one of claims 1 to 5, characterized in that each magazine is formed of a tray having housings added thereto.

8. A device according to one of claims 1 to 3, characterized in that said housings (111 to 113) are provided for storing a box or a stack of boxes, that the bottom of each housing has a slot opening out into said opening and into a bottom portion which houses said chain (200) having pegs suitable for passing through said slot.

9. A device according to claim 8, characterized in that said chain is composed of links (201) which slide over a closed slope having two rectilinear portions interconnected by two semicircles having substantially vertical axes,
- that two diametrically opposed links (220, 230) carry respective ejector pegs (225) suitable for passing through said slot,
- and that one of said rectilinear portions of said slope is offset downwards from the plane of said bottom in order to retract one of the pegs (225) beneath said bottom while the other peg performs its ejection function.

10. A device according to claim 9, characterized in that the length of said toothed sector is at least equal to one half of the length of the longest chain situated in a magazine.

11. A device according to claim 9, characterized in that each link (201) co-operates with the adjacent link by means of a ball and socket type joint (202, 203).

12. A device according to claim 1, characterized in that said housings are provided for storing a row of boxes (420) disposed between the turns (422) of a spring (423), that each housing includes a chain (430) in the bottom thereof co-operating with said extraction control member (440) and further co-operating at the opposite end from the removal opening of the housing with sprockets (433) of a vertical wheel (425) to which is fixed one end (424) of the spring (423).

13. A device according to claim 1, characterized in that said housings are provided for storing a row (449) of blister packs (441) having their tops hooked to the bottom portion of the turns (442) of a spring (443), that each housing comprises a chain (430) on its ceiling co-operating firstly with said extraction control member (440) and secondly at the opposite end of the housing from the removal opening thereof with the sprockets (447) of a vertical wheel (446) to which one end (424) of the spring (443) is fixed.

14. A device according to one of claims 12 and 13, characterized in that the number of sprockets on said wheel and the number of vertical truncated teeth of said chain are chosen in such a way as to ensure that said wheel performs one complete turn each time an extraction is initiated.

15. A device for storing and dispensing objetcs comprising
- a plurality of superposed annular magazines in a fixed position and having a common axis of symmetry, each magazine including a top portion having radial housings each suitable for containing a stack of objects of a given type, the wall of each housing closest to said axis having an opening for passing the lowest object of the stack,
- a unitary assembly for controlling the extraction means, situated in the cylindrical space inside the annular magazines and rotated about said common axis of symmetry by a stepper motor or a motor having an angle encoder, characterized in that
- the bottom of each housing has a slot (520) opening out into said opening (523) and into a bottom portion (524) in which for each of said housings extraction means for the bottom object (510) of the corresponding stack are disposed, said extraction means including a mechanical device for transmitting motion and provided with a chain (634) including pegs (636, 637) suitable for passing through said slot (520),
- said unitary extraction control assembly (500) bears at least one arm (711) at each level corresponding to a magazine, a first end of the arm having a shaft (721) coinciding with said axis of symmetry and embedded in the shaft of the arm situated at an upper or lower level thereto, the opposite end of this arm bearing a controllable mechanical member comprising a retractable finger (630) which describes a circular trajectory during the movement of said unitary assembly and capable, during its motion, of optionally driving said motion transmission device, said device further comprising a programmed computer provided to control said mechanical member as a function of its angular position relative to said housing (511 to 515), said angular position being defined by said stepper motor or said motor having an angle encoder (3).

16. A storage device according to claim 15, characterized in that said motion transmission device comprises a wheel (818) of which only one tooth (840) lies in the trajectory of said retractable finger (830).

17. A storage device according to claim 16, characterized in that said wheel (818) comprises additional teeth (814 to 847) suitable for co-operating with fixed fingers (821 to 827) disposed in the proximity of said controllable mechanical member (830) whenever said fixed fingers move along a circular trajectory having a different diameter from the trajectory of said retractable finger.

18. A storage device according to claim 17, characterized in that said wheel (618) transmits its motion to said chain having pegs (634) via a set of gears (632, 633).

## Patentansprüche

1. Vorrichtung zum Lagern und Verteilen von Gegenständen mit einer Vielzahl von übereinanderliegenden ringförmigen Magazinen (10) mit einer gemeinsamen Symmetrieachse (2), die eine kreiszylindrische Struktur (9) bilden, wobei jedes ringförmige Magazin (10) eine Vielzahl von Fächern (111, 112, 113) aufweist, die mindestens eine Schachtel lagern können und mit einer Öffnung (121) versehen sind, um eine einzige Schachtel durchzulassen, dadurch gekennzeichnet, daß jedes Fach entweder eine einzige Schachtel oder einen Stapel von Schachteln oder eine Reihe von Schachteln enthalten kann, daß es in seinem Boden (122) oder seiner Decke Mittel zur Entnahme einer darin befindlichen Schachtel aufweist, wobei diese Mittel eine Kette (200) enthalten, die in Höhe der Öffnung (121) einen senkrechten abgestumpften Zahn (124) aufweist, dessen Basis sich in einer ersten waagrechten Ebene befindet, wobei die Basis der anderen senkrechten Zähne (204) sich in einer zweiten waagrechten Ebene befindet, die unter der ersten liegt, wobei die Vorrichtung weiter aufweist:
- in Höhe jedes ringförmigen Magazins (10) mindestens ein Steuerorgan (20) zur Entnahme der Schachtel, das aus einem gezahnten flachen Sektor (21) besteht, der sich zwischen der ersten und der zweiten waagrechten Ebene befindet, wobei dieser Sektor mit einem ersten steuerbaren beweglichen Zahn (24) versehen ist, der sich, wenn keine Entnahmesteuerung vorliegt, in der gleichen Ebene wie die anderen Zähne und wenn ein Entnahmesteuerbefehl vorliegt, oberhalb der ersten waagrechten Ebene befindet, um in den abgestumpften Zahn (224) einzugreifen,
- einen Schrittschaltmotor oder einen einem Winkelkodierer zugeordneten Motor, um entweder die Struktur (9) oder das Entnahme-Steuerorgan (20) um die Achse (2) der Struktur (9) in Drehung zu versetzen,

- einen programmierten Rechner, um den beweglichen Zahn (24) in Abhängigkeit seiner Winkelstellung gegenüber dem Fach zu steuern, wobei die Winkelstellung durch die Drehung des Motors bestimmt wird und die Entnahme einer Schachtel aus der relativen Drehung des gezahnten flachen Sektors und der Entnahmemittel nach Eingreifen des abgestumpften Zahns resultiert.

2. Vorrichtung zum Lagern und Verteilen von Gegenständen nach Anspruch 1, dadurch gekennzeichnet, daß der Schrittschaltmotor die drehbare zylindrische Struktur (9) um die Achse (2) der Struktur (9) in Drehung versetzt und daß das Entnahme-Steuerorgan (20) ortsfest in Höhe jedes der ringförmigen Magazine (10) angeordnet ist.

3. Vorrichtung zum Lagern und Verteilen von Gegenständen nach Anspruch 1, dadurch gekennzeichnet, daß die zylindrische Struktur ortsfest angeordnet ist und einen inneren zylindrischen Raum autweist, in dem sich in Höhe jedes ringförmigen Magazins (311) mindestens ein Entnahme-Steuerorgan (320) befindet, wobei die Gesamtheit der Entnahme-Steuerorgane eine Einheit bildet, die durch den Motor um die Achse (2) in Drehung versetzt werden kann.

4. Vorrichtung nach einem der Ansprüche 1 bis 3, dadurch gekennzeichnet, daß jedes Magazin (300) parallelepipedische Fächer (301 bis 305) aufweist, die im wesentlichen radial bezüglich der Achse (2) der zylindrischen Struktur (9) angeordnet sind.

5. Vorrichtung nach Anspruch 1, dadurch gekennzeichnet, daß jedes Magazin (400) eine scheibenförmige Platte bildet und daß parallelepipedische Fächer verschiedener Größen (401 bis 404) so angeordnet sind, daß sie die größtmögliche Oberfläche der Platte bedecken.

6. Vorrichtung nach einem der vorhergehenden Ansprüche, dadurch gekennzeichnet, daß jedes Magazin aus einem einzigen Gußteil besteht.

7. Vorrichtung nach einem der Ansprüche 1 bis 5, dadurch gekennzeichnet, daß jedes Magazin aus einer Platte mit darauf montierten Fächern besteht.

8. Vorrichtung nach einem der Ansprüche 1 bis 3, dadurch gekennzeichnet, daß die Fächer (111 bis 113) zur Lagerung einer Schachtel oder eines Stapels von Schachteln vorgesehen sind, daß der Boden jedes Fachs einen Schlitz aufweist, der in der Öffnung endet und in einem unteren Bereich angeordnet ist, wo die Kette (200) sich befindet, deren Anschläge in den Schlitz eindringen können.

9. Vorrichtung nach Anspruch 8, dadurch gekennzeichnet, daß die Kette aus Kettengliedern (201) besteht, die auf einer geschlossenen Rampe gleiten, welche zwei geradlinige Bereiche aufweist, die durch zwei Halbkreise miteinander verbunden sind, deren Achsen im wesentlichen senkrecht sind,
- daß zwei einander diametral entgegengesetzte Kettenglieder (220, 230) je einen Auswerf-Anschlag (225) tragen, der in den Schlitz eindringen kann,
- und daß einer der geradlinigen Bereiche der Rampe schräg in Bezug auf die Ebene des Bodens verläuft, um das Zurückziehen eines Anschlags (225) unter den Boden zu ermöglichen,

während der andere Anschlag seine Auswurffunktion ausübt.

10. Vorrichtung nach Anspruch 9, dadurch gekennzeichnet, daß die Länge des gezahnten Sektors mindestens gleich der halben Länge der längsten in einem Magazin befindlichen Kette ist.

11. Vorrichtung nach Anspruch 9, dadurch gekennzeichnet, daß jedes Kettenglied (201) mit dem nächsten Kettenglied mittels eines Kugelgelenks (202, 203) zusammenwirkt.

12. Vorrichtung nach Anspruch 1, dadurch gekennzeichnet, daß die Fächer zur Aufnahme einer Reihe von Schachteln (420) ausgebildet sind, die zwischen den Spiralwindungen (422) einer Feder (423) angeordnet sind, daß jedes Fach in seinem Boden eine Kette (430) aufweist, die mit dem Entnahme-Steuerorgan (440) zusammenwirkt und andererseits auf der der Entnahmeöffnung entgegengesetzten Seite des Fachs mit den Stiften (433) eines senkrechten Rads (425) zusammenwirkt, an dem ein Ende (424) der Feder (423) befestigt ist.

13. Vorrichtung nach Anspruch 1, dadurch gekennzeichnet, daß die Fächer zur Aufnahme einer Reihe (449) von Blistern (441) ausgebildet sind, die in ihrem oberen Bereich am unteren Teil der Spiralwindungen (442) einer Feder (443) befestigt sind, daß jedes Fach an seiner Decke eine Kette (430) aufweist, die mit dem Entnahme-Steuerorgan (440) und andererseits auf der der Entnahmeöffnung entgegengesetzten Seite des Fachs mit den Stiften (447) eines senkrechten Rads (446) zusammenwirkt, an dem ein Ende (424) der Feder (443) befestigt ist.

14. Vorrichtung nach einem der Ansprüche 12 und 13, dadurch gekennzeichnet, daß die Anzahl von Stiften des Rads und die Anzahl von senkrechten abgestumpften Zähnen der Kette so gewählt werden, daß das Rad bei jedem Entnahmebefehl eine ganze Drehung durchführt.

15. Vorrichtung zum Lagern und Verteilen von Gegenständen mit

- einer Vielzahl von ortsfesten übereinanderliegenden ringförmigen Magazinen mit einer gemeinsamen Symmetrieachse, wobei jedes Magazin einen oberen Bereich mit radialen Fächern aufweist, die je einen Stapel von Gegenständen einer bestimmten Art enthalten, und wobei die Wand des der Achse am nächsten liegenden Fachs eine Öffnung für den Durchtritt des untersten Gegenstands des Stapels aufweist,

- einer Steuereinheit der Entnahmemittel im zylindrischen Innenraum der ringförmigen Magazine, die durch einen Schrittschaltmotor oder einen Motor mit Winkelkodierer um die gemeinsamen Symmetrieachse in Drehung versetzt wird, dadurch gekennzeichnet, daß

- der Boden jedes Fachs einen Schlitz (520) aufweist, der in die Öffnung (523) mündet und in einen unteren Teil (524), in dem sich für jedes der Fächer Mittel zur Entnahme des Gegenstands (510) befinden, der sich im unteren Teil des entsprechenden Stapels befindet, und daß diese Mittel eine mechanische Vorrichtung zur Bewegungsübertragung aufweist, die mit einer Kette (634) mit Anschlägen (636, 637) ausgestattet ist, welche in den Schlitz (520) eindringen können,

- wobei die Entnahme-Steuereinheit (500) auf jeder einem Magazin entsprechenden Etage mindestens einen Arm (711) aufweist, wobei ein erstes Ende des Arms eine Achse (721) trägt, die mit der Symmetrieachse zusammenfällt und in die Achse des Arms höher oder tiefer als dieser eingebaut ist, wobei das entgegengesetzte Ende des Arms ein mechanisches steuerbares Organ trägt, das einen einziehbaren Finger (630) enthält, der einen Kreisweg während der Bewegung der Einheit durchläuft und der während seiner Bewegung die Bewegungsübertragungsvorrichtung antreiben kann oder nicht,

wobei die Vorrichtung weiter einen programmierten Rechner aufweist, der das mechanische Organ in Abhängigkeit von seiner Winkelstellung gegenüber dem Fach (511 bis 515) steuert, wobei die Winkelstellung durch den Schrittschaltmotor oder den Motor mit Winkelkodierer (3) definiert wird.

16. Lagervorrichtung nach Anspruch 15, dadurch gekennzeichnet, daß die Bewegungsübertragungsvorrichtung ein Rad (818) aufweist, von dem nur ein Zahn (840) sich auf dem Weg des einziehbaren Fingers (830) befindet.

17. Lagervorrichtung nach Anspruch 16, dadurch gekennzeichnet, daß das Rad (818) andere Zähne (841 bis 847) aufweist, die mit ortsfesten Fingern (821 bis 827) zusammenwirken, die sich in der Nähe des steuerbaren mechanischen Organs (830) während der Bewegung dieser letzteren auf einem Kreisweg eines Durchmessers befinden, der sich von dem des Wegs des einziehbaren Fingers unterscheidet.

18. Lagervorrichtung nach Anspruch 17, dadurch gekennzeichnet, daß das Rad (618) seine Bewegung über ein Getriebe (632, 633) auf die Kette mit Anschlägen (634) überträgt.

# FIG. 1

# FIG.2

# FIG.3

# FIG. 4

# FIG. 5

EP 0 251 199 B1

# FIG.6

# FIG.7

# FIG.8

FIG.9

EP 0 251 199 B1

# FIG.10

207 202 206 205     202 206 205

225   203       203

201 224 220     204 201 201

200

# FIG.11A

225
224   220
202

203

# FIG.12A

202 201 203

204

# FIG.11B

225
220
224   206
205
206
203

# FIG.12B

201   206
205
204 203 206

EP 0 251 199 B1

## FIG.13

## FIG.14

## FIG.15

# FIG.16

FIG.17

FIG.18

EP 0 251 199 B1

FIG.19

EP 0 251 199 B1

# FIG.20

# FIG.21

EP 0 251 199 B1

FIG.22

# FIG.23

# FIG.24

EP 0 251 199 B1

FIG.25

# FIG.26

# FIG.27

FIG.28

EP 0 251 199 B1

# FIG.29

EP 0 251 199 B1

# FIG.30

## FIG.31

EP 0 251 199 B1

FIG.32

FIG.33

FIG.34

502

505

505

910    940
920

950    930

501

502

900

510

2

507

2

3

6